# EUROPEAN PATENT APPLICATION

(11) **EP 2 524 794 A1**
(43) Date of publication of application: **21.11.2012**
(21) Application number: 11400031.8
(22) Date of filing: 18.05.2011
(51) Int. Cl.: B29C 65/56, B29K 105/04, B29L 31/08

(54) **Foam or honeycomb core, rotor blade with foam or honeycomb cores and method of manufacturing such a rotor blade**

(71) Applicant: EUROCOPTER DEUTSCHLAND GmbH, 86609 Donauwörth (DE)
(72) Inventor: Kuntze-Fechner, Gerald, 83666 Waakirchen (DE)
(74) Representative: GPI & Associés

(57) **Abstract**

The invention relates to a foam core (11, 12) or honey comb core comprising insections (13, 17, 18) to form at least one profiled end, said at least one profiled end being profiled for a longitudinal form lock connection with a complementary profiled end of another foam core (11, 12). The invention relates as well to a method of manufacturing a rotor blade with such foam cores (11, 12) or honey comb cores and to a rotor blade, particularly a rotor blade of a helicopter, assembled of such foam cores (11, 12) or honey comb cores.

## Description

The invention relates to a foam core for a rotor blade, particularly a foam core for a rotor blade of a helicopter with the features of claim 1. The invention relates as well to a method of manufacturing such a rotor blade with the features of the preamble of claim 7 and to a rotor blade, particularly a rotor blade of a helicopter, with the features of the preamble of claim 9.

It is known to provide hard foam cores inside a blade's structure. Said foam cores are glued to each other along their frontal planes.

The document US 2008069699 A1 discloses a wind turbine blade comprising at least two wind turbine blade sections that include one or more strengthening structures, the ends of said strengthening structures being connected in a connection joint. The ends include corresponding connection surfaces, the one or more relevant dimensions of said surfaces being larger than the dimensions of the transverse surfaces of the strengthening structures at said ends.

The document EP 0037987 A2 discloses a method of producing foam-supported moulded bodies, such as wings, rotor blades, etc., in shell construction. In a laminating mould the shell of the moulded body is laminated in two separate moulded body halves made of fibre composite material and hardened. The foam core is directly produced in each shell of the moulded body and the moulded body halves are face-milled or, respectively, cut in their planes of separation and are then glued to one another.

The use of adhesives leads to an extra work step and long manufacturing cycles as the cure of suitable adhesives takes time. Two-component adhesives even take more time for hardening than contact adhesives. On top said two-component adhesives tend to form sharp edges of hard resin in the periphery of the area of contact of the foam cores with negative effects to the blade skin. Some adhesives contain unfavourable components of solvents that may affect negatively the quality of the laminate, e. g. reduced strength capability. The failure of a bonded joint or an untidy bonded joint may cause small gaps between the bonded foam cores during cure of the rotor blade giving rise to waved laminates in the blade skin with a subsequent significant reduction of strength capability, possible delamination and cracks during flight operation. Foam cores have varying thicknesses at their plane joints due to manufacturing tolerances, leading to local pressure differences in the blade skin resulting in a defective suboptimal laminate, such as waves. In case of bending the laminate across a plane joint the laminate is stressed along its entire joint length with the consequence of frequent delamination in the blade skin right across the plane joint.

It is an objective of the invention to provide a rotor blade allowing improved manufacture with less unfavourable components of solvents. It is a further objective of the invention to provide an improved method for the manufacture of such a rotor blade with no or less unfavourable components of solvents.

The objectives are solved with a foam core for a rotor blade according to the features of claim 1, a method for the manufacture of a rotor blade with the features of claim 7 and a rotor blade assembled of such foam cores according to the features of claim 9.

According to the invention a foam core is provided for a rotor blade, particularly a foam core for a rotor blade of a helicopter. Said foam core comprises at least one profiled end, said at least one profiled end being profiled for a longitudinal form lock connection with a complementary profiled end of an adjacent foam core. The surfaces of the foam cores along the form lock connection are overall rectangular with respect to the main plane of the foam core. The inventive foam core with a longitudinal form lock connection allows an assembly with another foam core without any adhesives thus avoiding all the disadvantages associated to adhesives as described with regard to the state of the art. The shape of the form lock is designed to provide a maximum contact surface at a preferably short longitudinal projection of the foam core for low local stresses at the highly reliable connection. A wavelike joint along the form lock essentially parallel to the longitudinal axis of the joint foam cores and essentially rectangular to the axis of bending moments reduces the peak stresses in the foam cores and most of all in the blade skin around the joint foam cores as compared to stresses at a plane joint with the same bending moments because said stresses will be more or less evenly distributed along a much longer surface of the wavelike joint of the form lock according to the invention resulting in considerable reduced stresses and allowing reduced shear and buckling between the blade skin and the joint foam cores. The distribution of the reduced stresses between blade skin and foam cores along a greater surface parallel to the longitudinal axis of the joint foam cores allows a more elastic reaction of greater shares of blade skin and foam cores. The profiled ends can be easily embedded into each other for longitudinal form lock connection. The inventive foam cores are particularly suitable for main and tail rotors of helicopters. The inventive concept is applicable as well for honey combs in rotor blades especially in the trailing edge areas of airfoils.

According to a preferred embodiment of the invention the at least one profiled end with the form lock is designed to resist to longitudinal tension.

According to a further preferred embodiment of the invention the at least one profiled end is provided with back tapered insections in longitudinal direction of the rotor blade. The insections of the inventive foam core have the advantage of little extra material consumption and reduced costs of a less complicated production. Any embedded insections of the inventive foam core have the advantage of avoiding any spreading of the legs remaining from the insections.

According to a further preferred embodiment of the invention are the back tapered insections swallow tailed allowing the use of a cylindrical drill with a diameter of 12-16 mm.

According to a further preferred embodiment of the invention a vertical projection of said at least one profiled end for a longitudinal form lock connection has about the same surface as the complementary profiled end for an equally favourable strain of both core foam ends.

According to a preferred embodiment of the invention a method of manufacturing a rotor blade of more than one foam core or honey comb core is provided, particularly a method of manufacturing a rotor blade of more than one foam core for a helicopter, with the following steps: Providing at least two foam cores each having at least one plane end, cutting insections into each of said at least one plane ends of said at least two foam cores such that the insections of one end of said at least one foam core are complementary to protrusions formed by the remaining material after cutting the insections of one end of said at least further foam core and plugging said insections at one end of said at least one foam core into the complementary to protrusions of said at least further foam core to fix a form lock connection for the two foam cores.

According to a preferred embodiment of the invention a rotor blade, particularly a rotor blade of a helicopter and more particularly a rotor blade of a main rotor of a helicopter, is assembled from more than one foam core according to any of the preceding claims and with foils of fibre composites sheathing said more than one foam core. At least one profiled end of at least one foam core is engaged with at least one complementary profiled end of at least one adjacent foam core for a longitudinal form lock.

A preferred embodiment of the invention is illustrated by way of the following description with reference to the attached drawings.
Fig. 1 shows a longitudinal cross section and a top view of two foam cores according to the state of the art,
Fig. 2 shows a longitudinal cross section and a top view of two foam cores according to the invention,
Fig. 3 shows a top view of a preferred embodiment of two foam cores according to the invention, and
Fig. 4 shows a top view of another preferred embodiment of two foam cores according to the invention.

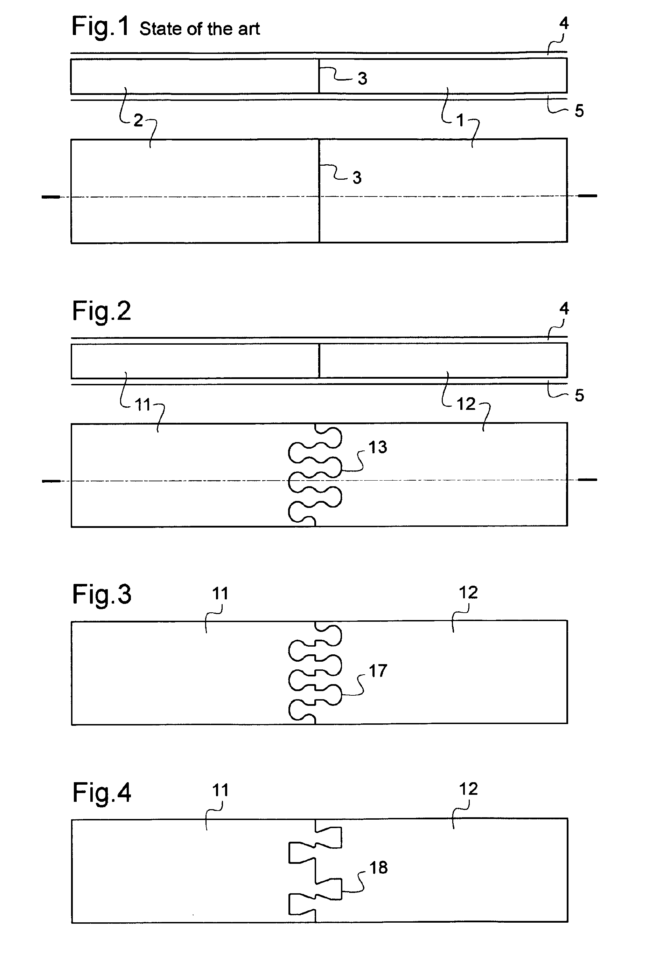

According to Fig. 1 a left hand foam core 1 is connected to a right hand foam core 2 at a bonded joint 3 of two plane ends of said two foam cores 1, 2. Both foam cores 1, 2 are covered on either side with upper and lower blade skins 4, 5 of laminate to form a rotor blade - corresponding to the state of the art. Instead of foam core there may be honey combs as used in rotor blades especially in the trailing edge areas of airfoils.

According to Fig. 2 corresponding features are referred to with the references of Fig. 1. A left hand foam core 11 is connected to a right hand foam core 12 at a plugged joint of two ends of said two foam cores 11, 12. The respective cross sections of the two foam cores 11, 12 are about the same near the two ends of said two foam cores 11, 12.

Insections 13 are cut respectively in essentially longitudinal direction into each of said two foam cores 11, 12 from the originally plane ends 14, 15. The insections 13 are formed to result in undulated protrusions of remaining material of said two foam cores 11, 12, the protrusions being complementary with the insections 13. The undulated protrusions extend essentially parallel to each other from either of said two foam cores 11, 12. The length L of the insections 13 is approximately equal to 3 times the partition of the width, being the same for each of said two foam cores 11, 12 as the respective widths of said two foam cores 11, 12 are about the same at the insections 13. The partition of the width is approximately equal to the chord of the foam core divided through the number of partitions, i. e. with the number of partitions being equal to three, the length L of the insections 13 is approximately equal to the chord of the foam cores 11, 12. The amplitude along the longitudinal direction of the undulated insections 13 is approximately equal to the partition of the width divided through 2.5 with two apexes along the entire length L of each of the insections 13. Each of the foam cores 11, 12 are provided with partial insections 16 at their leading edges as well as at their trailing edges extending longitudinally half as far as the insections 13.

The insections 13, 16 of foam core 11 are shifted with respect to the insections 13, 16 of foam core 12 such that the insections 13, 16 of foam core 11 mesh smoothly with the protrusions of foam core 12 when the form lock connection of foam core 12 is fixed with foam core 11 while the peripheries of the foam cores 11, 12 are aligned longitudinally.

The foam cores 11, 12 are covered on either side with the upper and lower blade skins 4, 5 of laminate.

According to Fig. 3 corresponding features are referred to with the references of Fig. 1, 2. The left hand foam core 11 is connected to the right hand foam core 12 at a plugged joint of two differently shaped ends of said two foam cores 11, 12. The respective cross sections of the two foam cores 11, 12 are about the same near the two ends of said two foam cores 11, 12.

Bulb shaped insections 17 are cut respectively in essentially longitudinal direction into each of said two foam cores 11, 12 from their originally plane ends 14, 15 to result in remaining material complementary to said bulb shaped insections 17. Three bulb shape insections 17 extend essentially parallel to each other into either of said two foam cores 11, 12 with a length L approximately equal to the chord of the foam cores 11, 12. The amplitude along the longitudinal direction of the bulb shaped insections 17 is approximately equal to the amplitude shown in Fig.2 but with only one apex along the entire length L of each of the bulb shaped insections 17. Half way of the bulb shaped insections 17 there are plane sections separating the bulb shaped insections 17 in a transversal direction of said foam cores 11, 12.

The bulb shaped insections 17 of foam core 11 are shifted with respect to the corresponding bulb shaped insections 17 of foam core 12 such that the bulb shaped insections 17 of foam core 11 mesh smoothly with the remaining material of foam core 12 when the form lock connection of foam core 12 with foam core 11 is fixed while the peripheries of the foam cores 11, 12 are aligned longitudinally.

According to Fig. 4 corresponding features are referred to with the references of Fig. 1-3. The left hand foam core 11 is connected to the right hand foam core 12 at a plugged joint of two differently shaped ends of said two foam cores 11, 12. The respective cross sections of the two foam cores 11, 12 are about the same near the two ends of said two foam cores 11, 12.

Swallow tailed insections 18 are cut respectively into each of said two foam cores 11, 12 from the originally plane ends 14, 15 to result in remaining material with protrusions complementary to said swallow tailed insections 18. Two swallow tailed insections 18 extend in the longitudinal direction of either of said two foam cores 11, 12 with a length L approximately equal to the chord of the foam cores 11, 12. The width at the end of the swallow tailed insections 18 is comparable to the amplitude shown in Fig.2. Half way the length L of the swallow tailed insections 18 there are plane sections separating the swallow tailed insections 18 in a transversal direction of said foam cores 11, 12.

The swallow tailed insections 18 of foam core 11 are shifted with respect to corresponding swallow tailed insections 18 of foam core 12 such that the swallow tailed insections 18 of foam core 11 mesh smoothly with the protrusions of foam core 12 when the form lock connection of foam core 12 is fixed with foam core 11 while the peripheries of the foam cores 11, 12 are aligned longitudinally.

A method of manufacturing a rotor blade of at least two foam cores 11, 12 for a helicopter (not shown) comprises the following steps: Providing said at least two foam cores 11, 12 each having at least one plane end, cutting insections 13, 17, 18 into each of said at least one plane ends of said at least two foam cores 11, 12 such that the insections 13, 17, 18 of one end of said at least one foam core 11, 12 are complementary to protrusions formed by the remaining material after cutting the insections 13, 17, 18 of one end of said at least further foam core 11, 12, and plugging said insections 13, 17, 18 at one end of said at least one foam core 11, 12 into the complementary protrusions of said at least further foam core 11, 12 to fix a form lock connection for the two foam cores 11, 12.

## Claims

1. A foam core (11, 12) or honey comb core for a rotor blade, particularly a foam core (11, 12) or honey comb core for a rotor blade of a helicopter, said foam core (11, 12) or honey comb core comprising insections (13, 17, 18) to form at least one profiled end, said at least one profiled end being profiled for a longitudinal form lock connection with a complementary profiled end of another foam core (11, 12).

2. The foam core (11, 12) or honey comb core according to claim 1,
**characterized in that** the at least one profiled end with the form lock is designed to resist to longitudinal tension.

3. The foam core (11, 12) or honey comb core according to claim 1,
**characterized in that** the at least one profiled end is wavelike and/or provided with back tapered insections (13, 17, 18) in longitudinal direction of the rotor blade.

4. The foam core (11, 12) or honey comb core according to claim 3,
**characterized in that** the back tapered insections (13, 17, 18) are undulated, bulb shaped or swallow tailed.

5. The foam core (11, 12) or honey comb core according to claim 1,
**characterized in that** a rectangular projection of said at least one profiled end for a longitudinal form lock connection has about the same surface as the complementary profiled end.

6. The foam core (11, 12) or honey comb core according to claim 1,
**characterized in that** an overlap of 0.05 to 0.2 mm is provided in a rectangular projection of said at least one profiled end for a longitudinal form lock connection relative to the complementary profiled end.

7. A method of manufacturing a rotor blade of more than one foam core (11, 12) according to any of the preceding claims, particularly a method of manufacturing a rotor blade of more than one foam core (11, 12) for a helicopter, with the following steps:
providing at least two foam cores (11, 12) each having at least one plane end,
cutting insections (13, 17, 18) into each of said at least one plane ends of said at least two foam cores (11, 12) such that the insections (13, 17, 18) of one end of said at least one foam core (11, 12) is complementary to protrusions formed by the remaining material after cutting of one end of said at least further foam core (11, 12), and
plugging said insections (13, 17, 18) at one end of said at least one foam core (11, 12) into the complementary protrusions of said at least one further foam core (11, 12) to fix a form lock connection for the two foam cores (11, 12).

8. The method according to claim 7,
**characterized by** using a cylindrical drill with a diameter of 12-16 mm for cutting the intersections (13, 17, 18).

9. A rotor blade, particularly a rotor blade of a helicopter and more particularly a rotor blade of a main rotor of a helicopter, assembled from more than one foam core (11, 12) or honey comb core according to any of the claims 1- 6 and with blade skins (4, 5) of fibre composites sheathing said more than one foam core (11, 12) or honey comb core,
**characterized in that** at least one profiled end of at least one foam core (11, 12) or honey comb core is engaged with at least one complementary profiled end of at least one adjacent foam core (11, 12) or honey comb core for a longitudinal form lock.
